# EUROPEAN PATENT APPLICATION

(11) **EP 1 306 179 A1**
(43) Date of publication of application: **02.05.2003**
(21) Application number: 02020428.5
(22) Date of filing: 11.09.2002
(51) Int. Cl.: B29C 31/06, B65G 65/48

(54) **Dosage device particularly for gravimetric mixers**

(30) Priority: 16.10.2001 IT PD20010241
(71) Applicant: Piovan S.P.A., 30036 Santa Maria Di Sala (IT)
(72) Inventor: Dall'Acqua, Illario, 31100 Treviso (IT)
(74) Representative: Modiano, Guido, Dr.-Ing.

(57) **Abstract**

A dosage device particularly for gravimetric mixers, which comprises:
-- a first hollow body (14), which is provided in an upward region with a loading opening (15) that is arranged below the outlet (16) of a corresponding hopper (11) and, in a downward region, with an unloading opening (17) that is arranged above a weighing tank (18), in which there is
-- a second body (19), associated with a corresponding crank system (34, 35, 36) and movable alternately from a position (15) for loading to a position (17) for unloading granules (22) from a pocket (20) formed within its perimetric outline. The first and second bodies (14, 19) provide a coupling by virtue of which only the granules (22) contained within the volume of the pocket (20) are conveyed between the loading and unloading positions.

## Description

The present invention relates to a dosage or metering device particularly for gravimetric mixers.

Dosage devices suitable to provide exactly measured quantities of plastic granules and to mix these components in order to subsequently supply them to plastic processing devices, such as for example injection-molding or extrusion systems, are known in the art.

The mixers comprise multiple hoppers, containing plastic granules, which are arranged on a common supporting frame, above devices that allow to dose a preset quantity of granules onto a weighing tank, in order to provide a mixture intended for the molding systems.

In particular, some of the components of the plastic mixture must be dosed in very small percentages to be used during the molding steps, and the dosage must be very precise; this requires dosage devices that do not have a particularly simple structure and must not entail appreciable dosage errors.

For this type of component it is not possible to use dosage devices of the screw feeder type, which supply continuously the material that arrives from the hopper.

Screw feeder devices have the advantage of a simple structure, but on the other hand entail dosage errors.

When a preset quantity by weight of material measured by the weighing tank is reached, at the instant that directly follows the halting of the dosage device a certain quantity of material is still supplied to the tank, causing a percentage error of the component in the mixture.

Devices with vibrating valves are also known in which a gate, which opens and closes an opening for the passage of the material provided on the bottom of the hopper, provides at a high rate small quantities of granules.

Vibrating valve devices allow to minimize the dosage errors of screw feeder devices, but on the other hand they have a rather complicated structure.

The aim of the present invention is to solve or substantially reduce the problems of known types of dosage device, particularly for gravimetric mixers.

Within the scope of this aim, an important object is to provide a dosage device for small quantities of material that has a simple structure.

Another object is to provide a dosage device that is capable of providing granules in a repeatable quantity.

Another object is to provide a dosage device that is reliable.

Another object is to provide a dosage device that can also be applied to gravimetric mixers that are already commercially available.

Another object is to provide a dosage device that has a low cost.

This aim and these and other objects that will become better apparent hereinafter are achieved by a dosage device particularly for gravimetric mixers, characterized in that it comprises:
-- a first hollow body, which is provided in an upward region with a loading opening that is arranged below the outlet of a corresponding hopper and, in a downward region, with an unloading opening that is arranged above a weighing tank, in which there is
-- a second body, which is associated with a corresponding crank system and can move alternately from a position for loading to a position for unloading granules from a pocket formed within its perimetric outline,
-- said first and second bodies providing a coupling by virtue of which only the granules contained within the volume of said pocket are conveyed between said loading and unloading positions.

Further characteristics and advantages of the invention will become better apparent from the description of a preferred but not exclusive embodiment thereof, illustrated only by way of non-limitative example in the accompanying drawings, wherein:

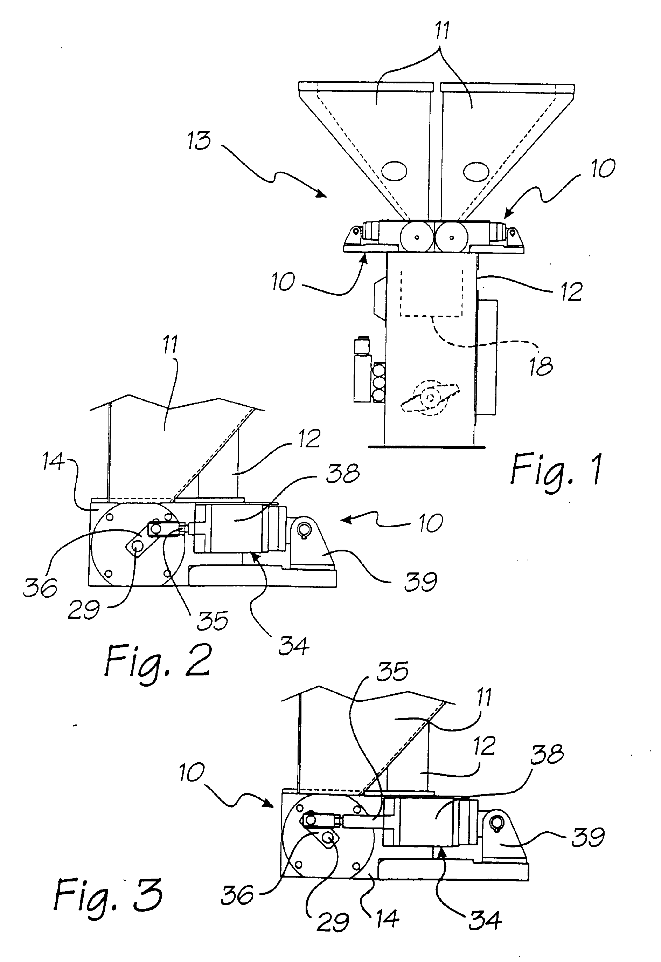

Figure 1 is a view of a gravimetric mixer to which dosage devices according to the present invention are applied;
Figures 2 and 3 are views of a dosage device according to the present invention in two steps of operation;

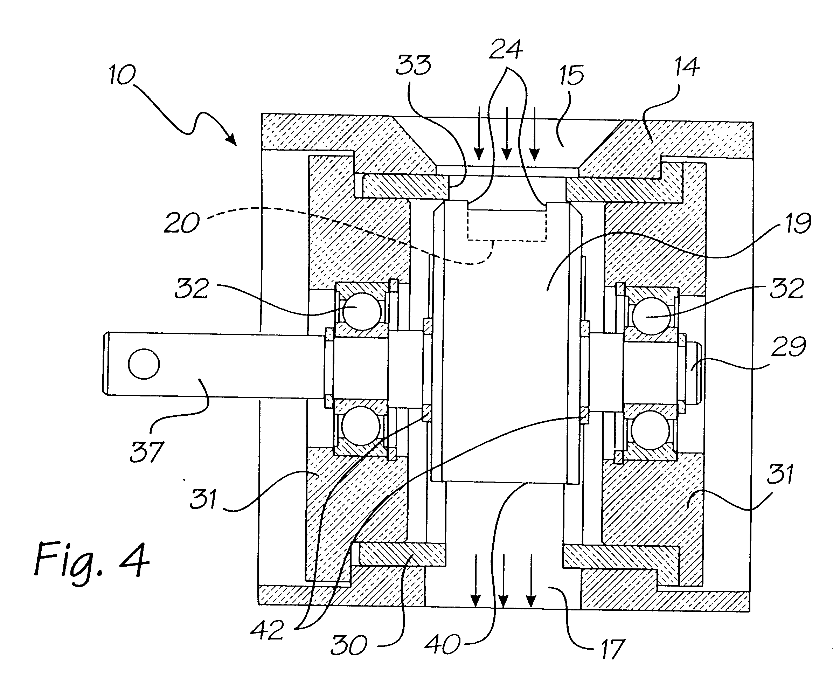

Figure 4 is a cross-sectional view of the device;

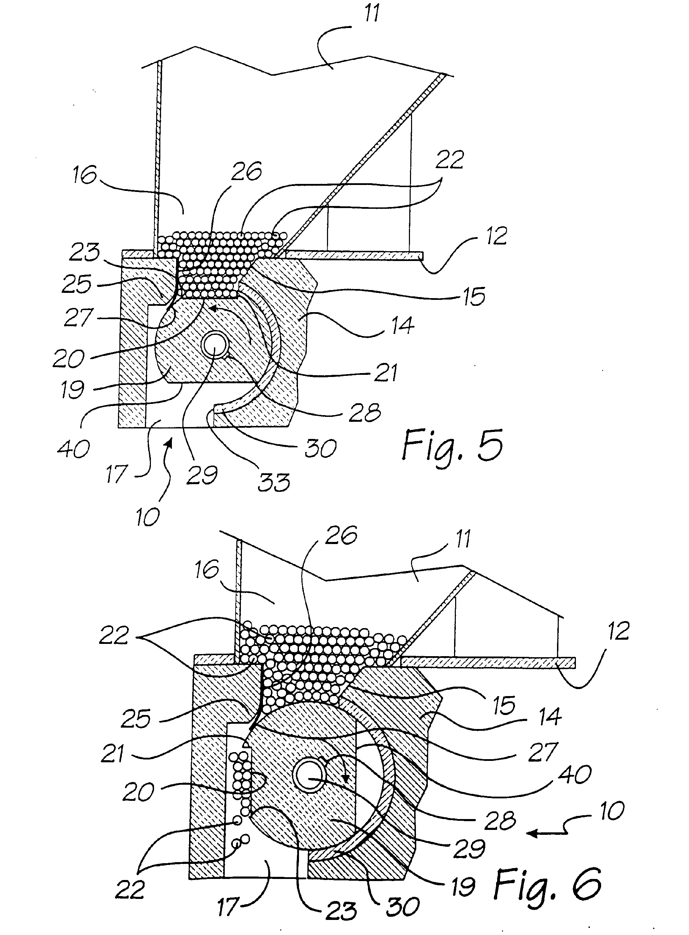

Figures 5 and 6 are schematic cross-sectional views of the device according to the invention, respectively in the two steps of operation shown in Figures 2 and 3.

With particular reference to the above described figures, a dosage device particularly for gravimetric mixers, according to the invention, is generally designated by the reference numeral 10.

The device 10 is arranged below a hopper 11 and is supported by the frame 12 of a gravimetric mixer, generally designated by the reference numeral 13.

The device 10 comprises a first hollow body 14 that is provided, in an upward region, with a loading opening 15 that is arranged below the outlet 16 of the hopper 11 and, in a downward region, with an unloading opening 17 arranged above a weighing tank 18 of the mixer 13.

A second body 19 is arranged within the first body 14 and is provided with a flat pocket 20 that is suitable to contain plastic granules 22 that arrive from the hopper 11.

The second body 19 is substantially cylindrical, is arranged so as to have a horizontal axis, is rotatably coupled inside the first body 14, and is associated with a corresponding crank system, described better hereinafter, which allows to move it from a position for loading to a position for unloading the granules contained in the pocket 20.

The pocket 20 is formed in the second body 19 within its perimetric outline by removing a partial cylindrical segment, such as to generate a rear shoulder 21 and a front lip 23, referred to the advancement or rotation direction of the second body 19 from the position for loading to the position for unloading the granules 22 from said pocket 20.

The pocket 20 has smaller dimensions, with respect to the rotation axis, than the second body 19, so as to form lateral shoulders 24.

The portion 25 of the first body 14 that is comprised between the loading opening 15 and the unloading opening 17 faces the cylindrical surface of the second body 19 and has dimensions that prevent the passage of the granules 22 that are not arranged within the pocket 20 when the second body 19 rotates from the loading position to the unloading position and vice versa.

In particular, an elastic lamina 26 is fixed in a cantilevered fashion on one wall of the loading opening 15 formed by the portion 25 and scrapes against the second body 19, which is wider than the pocket 20.

The first body 19 is keyed by means of a key 28 on a shaft 29 and is locked axially thereon by virtue of elastic rings 42.

The second body 19 is arranged, with minimal play, inside a bush 30 that is internally rigidly coupled to the first body 14 and on the ends of which bushings 31 are fixed which accommodate the bearings 32 keyed onto the shaft 29.

The bush 30 has a lateral opening 33 that lies circumferentially substantially starting from the loading opening 15 up to the unloading opening 17 of the first body 14.

The crank system is constituted, in this case, by a double-acting pneumatic piston 34 that is arranged substantially horizontally and at right angles to the shaft 29, the head of its stem 35 being articulated to a crank 36 that is fixed radially to one end 37 of the shaft 29 that protrudes from the first body 14.

The body 38 of the pneumatic piston 34 is pivoted at the rear to a bracket 39 that is rigidly coupled to the frame 12 of the mixer 13.

The stroke of the stem 35 causes a rotation of the second body 19 substantially through 90 sexagesimal degrees so as to move the pocket 20 from the loading position, below the loading opening 15, in a substantially horizontal configuration, to the unloading position, at the unloading opening 17, in a substantially vertical configuration.

The second body 19, finally, is provided with a flat region 40 that lies opposite the pocket 20 and runs parallel thereto.

As regards operation, when the stem 35 of the pneumatic piston 34 is fully retracted, the second body 19 is in such an angular position that the pocket 20 is arranged at the loading opening 15.

The granules 22 contained within the hopper 11, by being subjected to gravitational force, arrange themselves on top of the second body 19, and some enter the pocket 20.

When the pneumatic piston 34 extends the stem 35, the second body 19 rotates until the pocket 20 arranges itself substantially vertically, at the unloading opening 17.

During the rotation, owing to the dimensions of the portion 25 of the first body 14 and to the presence of the scraping elastic lamina 26, only the granules 22 that lie within the volume of the pocket 20 are conveyed to the unloading opening 17, subsequently falling into the weighing tank 18.

The stem 35 of the pneumatic piston 34 is subjected to a reciprocating motion at a rate that can be set by the user, so as to make the second body 19 perform an alternating rotation, providing a substantially constant quantity of granules to the weighing tank 18, with a rate that depends on the rate of the motion of the stem 35.

In practice it has been found that the intended aim and objects of the present invention have been achieved.

A dosage device has in fact been provided which has a simple structure and is capable of providing small quantities of plastic granules at a high rate.

The quantity of plastic granules supplied in each instance is repeatable, and this allow precision in measuring the quantity of granules to be mixed as well as an exact calibration of the weighing tank, so as to minimize percentage dosage errors.

The present invention is susceptible of numerous modifications and variations, all of which are within the scope of the appended claims.

The technical details can be replaced with other technically equivalent elements.

The materials, so long as they are compatible with the contingent use, as well as the dimensions, may be any according to the requirements.

The disclosures in Italian Patent Application No. PD2001A000241 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A dosage device particularly for gravimetric mixers, **characterized in that** it comprises:
-- a first hollow body (14), which is provided in an upward region with a loading opening (15) that is arranged below the outlet (16) of a corresponding hopper (11) and, in a downward region, with an unloading opening (17) that is arranged above a weighing tank (18) , in which there is
-- a second body (19), which is associated with a corresponding crank system (34, 35, 36) and can move alternately from a position (15) for loading to a position (17) for unloading granules (22) from a pocket (20) formed within its perimetric outline,
-- said first (14) and second bodies (19) providing a coupling by virtue of which only the granules (22) contained within the volume of said pocket (20) are conveyed between said loading (15) and unloading (17) positions.

2. The device according to claim 1, **characterized in that** said second body (19) is rotatably coupled inside said first body (14).

3. The device according to claim 2, **characterized in that** said second body (19) is substantially cylindrical and is arranged so that its axis is substantially horizontal.

4. The device according to the preceding claims, **characterized in that** said pocket (20) is formed by removing a partial cylindrical segment, such as to form at least one shoulder (21) that lies to the rear with respect to the advancement direction of said second body (19) from the position (15) for loading to the position (17) for unloading the granules (22).

5. The device according to claim 4, **characterized in that** said pocket (20) has an extension that defines a front lip (23), with respect to the advancement direction of said second body (19) from the position (15) for loading to the position (17) for unloading the granules.

6. The device according to claims 4 and 5, **characterized in that** said pocket (20) has dimensions, with respect to the rotation axis, that are smaller than those of said second body (19), so as to form lateral shoulders (24).

7. The device according to one or more of the preceding claims, **characterized in that** the portion (25) of said first body (14) that is comprised between the loading (15) and unloading (17) openings faces the cylindrical surface of said second body (19) and has dimensions that prevent the passage of granules (22) that are not arranged within the volume of said pocket (20), when the second body (19) rotates from the loading position (15) to the unloading position (17).

8. The device according to claim 7, **characterized in that** said portion (25) of said first body (14) has an elastic lamina (26) fixed thereto in a cantilever fashion, said lamina (26) scraping against said second body (19) and being wider than said pocket (20).

9. The device according to one or more of the preceding claims, **characterized in that** said second body (19) is keyed on a shaft (29) that is rotatably coupled to said first body (14) and is associated with said crank system (34, 35, 36).

10. The device according to one or more of the preceding claims, **characterized in that** said second body (19) is arranged, with minimal play, inside a bush (30) that is fixed internally to said first body (14) and on the ends on which bushings (31) are fixed which accommodate the bearings (32) that are keyed on said shaft (29), said bush (30) having lateral openings (33) at least at said loading (15) and unloading (17) openings.

11. The device according to claim 10, **characterized in that** said bush (30) has a lateral opening (33) that runs circumferentially substantially starting from said loading opening (15) to said unloading opening (17).

12. The device according to one or more of the preceding claims, **characterized in that** said crank system is constituted by a double-acting pneumatic piston (34), which is arranged substantially horizontally at right angles to said shaft (29), the head of its stem (35) being articulated to a crank (36) that is fixed radially to an end (37) of said shaft (29) that protrudes from said first body (14), the body (38) of said first pneumatic piston (34) being pivoted to a bracket (39) that is rigidly coupled to the frame (12) of the mixer (13).

13. The device according to claim 12, **characterized in that** said stem (35) of the pneumatic piston (34) is provided so as to move over a stroke that imparts a rotation of substantially 90 sexagesimal degrees to said second body (19) from the loading position (15) to the unloading position (17).
